# EUROPEAN PATENT SPECIFICATION

(11) **EP 2 189 881 B1**
(45) Date of publication and mention of the grant of the patent: **07.03.2012**
(21) Application number: 08019712.2
(22) Date of filing: 11.11.2008
(51) Int. Cl.: G06F 3/033

(54) **Digitizer and input device**
Digitalisierer und Eingabegerät
Numériseur et dispositif d'entrée

(43) Date of publication of application: 26.05.2010
(73) Proprietor: Wacom Co., Ltd., Saitama, 349-1148 (JP)
(72) Inventor: Sato, Yuta c/o Wacom Co. Ltd., Saitama 349-1148 (JP)
(74) Representative: Appelt, Christian W.

(56) References cited:
- EP-A- 0 694 865
- EP-A- 0 732 665
- FR-A- 1 340 928
- US-A1- 2007 035 917

## Description

### BACKGROUND OF THE INVENTION

### FIELD OF THE INVENTION:

The present invention relates to a digitizer for performing, with an input tool such as a finger or a position indicator, handwriting input operation such as handwriting a character or hand-drawing an illustration, and an input device equipped with the digitizer.

### DESCRIPTION OF THE RELATED ART:

Examples of known digitizers include the one disclosed in Japanese Unexamined Patent Application Publication No. H6-214700, for example, which discloses a coordinate detecting device for performing coordinate input operation on an external device such as a computer.

The coordinate detecting device disclosed in Japanese Unexamined Patent Application Publication No. H6-214700 includes a circuit board, a case containing the circuit board therein, and a cable extending from the circuit board to outside of the case to electrically connect the circuit board to the external device. Further, guiding holes for inserting check pins are arranged in a portion of the case. Further, check terminals for extracting input/output signals exchanged between the circuit board and the external device are provided on the circuit board at a position where the check terminals can be electrically connected to the check pins when the check pins are inserted into the guiding holes.

Such a coordinate detecting device is placed on a desk to be connected to an external device, such as a personal computer and a PDA (Personal Digital Assistant), through the cable. A user performs handwriting input operation, such as handwriting a character or hand-drawing an illustration, on an effective area (i.e., an input portion) of the coordinate detecting device with a position indicator (which is a pen-like input tool), just like drawing a character or illustration on a piece of paper with a writing utensil such as a pencil and a ballpoint pen. While the user is performing the input operation with the position indicator, the coordinate detecting device detects the coordinates indicated by the position indicator and transmits the detected coordinates to the external device, so that a pointing operation or a handwriting input operation, such as handwriting a character or hand-drawing an illustration, can be performed on the external device.

When drawing an illustration or a character on a piece of paper with a writing utensil such as a pen, a user may sometimes feel uneasy to draw the illustration or character depending on the direction of the line of the illustration or character to be drawn or the direction of the paper. In that case, the user may rotate the paper to change the direction of the paper so that the illustration or character is easy to be drawn. However, in the coordinate detecting device disclosed in Japanese Unexamined Patent Application Publication No. H6-214700, the case can not be rotated to facilitate the handwriting input operation in a manner similar to rotating the paper when drawing the illustration or character on a piece of paper with a writing utensil. Thus, when performing handwriting input operation, if the case is oriented in a direction in which the user feels uneasy to perform the handwriting input operation, the user has to change his (or her) own position relative to the case so that the handwriting input operation becomes easy to perform. Accordingly, with the coordinate detecting device disclosed in Japanese Unexamined Patent Application Publication No. H6-214700, the user has to change his (or her) own position or direction every time when he (or she) feels uneasy to perform the handwriting input operation, depending on the direction of the line of the illustration or character to be drawn. Consequently, operability of such a coordinate detecting device is bad, and therefore working efficiency of the user is low.

EP 0 694 865 describes a position detector utilizing electromagnetic induction, wherein an inclination of the pen-shaped position indicator and an angle of rotation thereof in the vertical direction in relation to the table surface is detected. EP 0 732 665 A1 describes a coordinate input apparatus which permits accurate input of drawings even when their orientation is arbitrary changed during the input of the drawings. The coordinate input apparatus includes a position detection plate, an input area formed over the surface of the position detection plate, a first position indicator, a rotary plate support frame fitted into a rectangular depression formed in the position detection plate, a rotary plate fitted into the rotary plate support frame, a second position indicator incorporated into the rotary plate and an optional finger grip hole. Further position detection devices are also described in FR 1340928 A and US 2007/035917.

### SUMMARY OF THE INVENTION

The aforesaid problems are solved by a digitizer according to claim 1. Claims 2 to 10 refer to specifically advantageous realizations of the subject matters of the independent claim.

The present invention has been made in view of the aforesaid problems, and an object of the present invention is to provide a user-friendly digitizer capable of being rotated to a direction in which the user feels easy to perform the handwriting input operation without bothering to change his (or her) position, and an input device equipped with the digitizer.

A digitizer according to a first aspect of the present invention includes: a case having an input portion; at least three first projected portions fixed to the case, the first projected portions coming into contact with a placing surface so as to support the case on the placing surface; and a second projected portion arranged on an inner side of an area defined by connecting the points at which the first projected portions are fixed to the case, wherein the second projected portion is configured in such a manner that, when a force substantially parallel to the placing surface is applied to the case, the first projected portions slide against the placing surface so that the case rotates with the second projected portion as a rotation axis.

An input device according to another first aspect of the present invention includes: a digitizer as described above on which information is inputted; and an input tool for inputting information on the digitizer. a tip end of the second projected portion and ends of the first projected portions are located in the same plane when the case is placed on the placing surface, wherein a friction of the second projected portion against the placing surface is larger than a friction of the first projected portions against the placing surface, so that,

With the digitizer and the input device according to the present invention, by providing the second projected portion capable of rotatably supporting the case, it becomes possible to easily rotate the case to a direction in which the user feels easy to perform the handwriting input operation, and therefore operability of the digitizer and the input device can be improved.

### BRIEF DESCRIPTION OF THE DRAWINGS

Fig. 1 is a perspective view showing an input device according to an embodiment of the present invention;
Fig. 2 is a block diagram showing a digitizer according to the aforesaid embodiment of the present invention;
Fig. 3 is a perspective view of the digitizer when seen from a rear side thereof;
Fig. 4 is a perspective view of the digitizer of the aforesaid embodiment in a state where a lower case thereof is detached;
Fig. 5 is a cross section showing the digitizer of the aforesaid embodiment;
Fig. 6 is an enlarged cross section showing a second projected portion and an elastic body of the digitizer of the aforesaid embodiment;
Fig. 7 is an enlarged perspective view showing the second projected portion and the elastic body of the digitizer of the aforesaid embodiment;
Fig. 8 is an exploded perspective view showing the second projected portion and the elastic body of the digitizer of the aforesaid embodiment;
Figs. 9A to 9C show the second projected portion of the digitizer of the aforesaid embodiment, in which Fig. 9A is a perspective view showing the digitizer when seen from a front side thereof, Fig. 9B is a perspective view showing the digitizer when seen from a rear side thereof, and Fig. 9C is a cross section of the digitizer;
Fig. 10 is a side view showing the digitizer of the aforesaid embodiment in a state where the digitizer is placed on a placing surface;
Fig. 11 is an illustration explaining the relationship of the height of first projected portions and the height of the second projected portion;
Fig. 12 is a cross section showing another example of the second projected portion of the digitizer; and
Fig. 13 is a cross section showing further another example of the second projected portion of the digitizer.

### DETAILED DESCRIPTION OF THE PREFERRED EMBODIMENT(S)

An input device according to an embodiment of the present invention will be described below with reference to the attached drawings. It should be understood that the present invention is not limited to this embodiment.

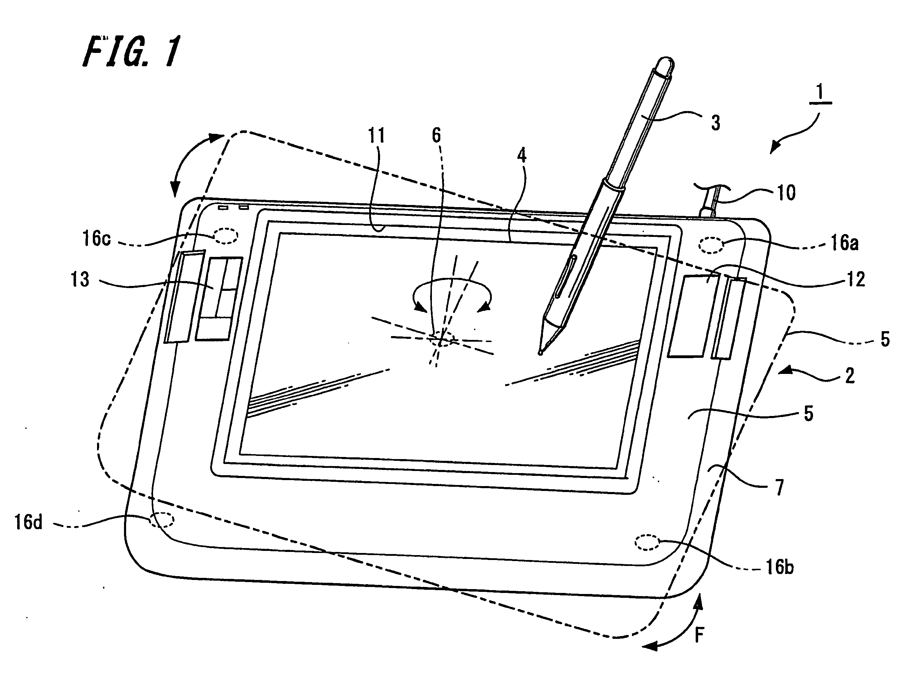

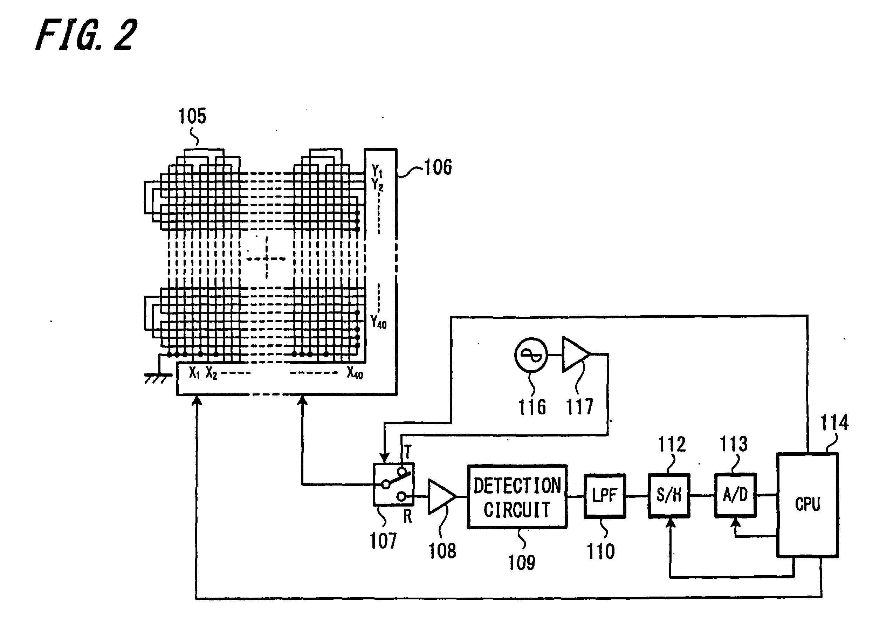

Fig. 1 is a perspective view showing the input device, and Figs. 2 to 13 show a digitizer of the input device.

An input device 1 according to the present embodiment includes a digitizer 2 on which information is inputted, and a pen-like position indicator 3 for inputting information on the digitizer 2. The pen-like position indicator 3 is an example of an input tool. The digitizer 2 of the input device 1 is connected to an external device (not shown), such as a personal computer or a PDA (Personal Digital Assistant), through a cable 10 so that the input device 1 can be used as an input device of the external device.

The position indicator 3 works based on, for example, an electromagnetic resonance technology. A user uses the position indicator 3 to indicate the position of the position indicator 3 on the digitizer 2. The position indicator 3 has a resonant circuit resonating at a predetermined frequency. The resonant circuit resonates with a signal transmitted through the digitizer 2 and having the predetermined frequency, so that an induced voltage is generated in the resonant circuit. When the transmission of the signal having the predetermined frequency is stopped, the induced voltage generated in the resonant circuit causes the position indicating coil to generate an electromagnetic wave. Further, by transmitting the electromagnetic wave generated in the position indicating coil of the resonant circuit to the side of the digitizer 2, the position indicator 3 indicates the position thereof on the digitizer 2.

The digitizer 2 includes an input portion 4, a thin rectangular parallelepiped-shaped hollow case 5 having the input portion 4, a second projected portion 6 rotatably supporting the case 5, and a plurality of first projected portions 16a to 16d.

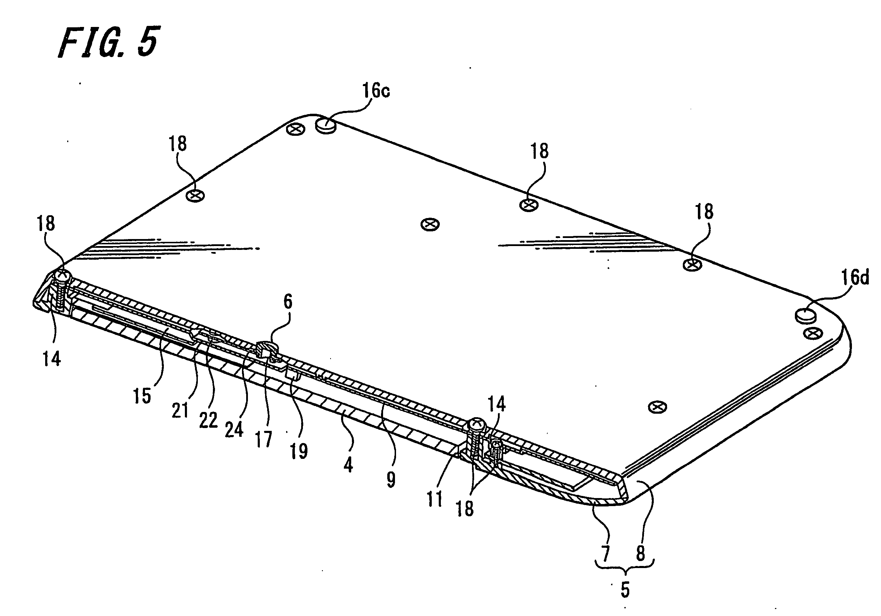

As will be described later with reference to Fig. 5, the case 5 includes an upper case 7 having an opening 11 for exposing an input surface of the input portion 4, a lower case 8 overlapped with the upper case 7, and a frame 9 vertically partitioning a space defined by the upper case 7 and the lower case 8.

Fig. 2 is a block diagram explaining the configuration and operation of the digitizer.

The input portion 4 includes a sheet-like position detecting section 105 which operates based on an electromagnetic resonance technology and a display section (not shown) arranged behind the position detecting section 105.

The position detecting section 105 includes forty loop coils X₁-X₄₀ arranged in an X-axis direction and forty loop coils Y₁-Y₄₀ arranged in a Y-axis direction. The loop coils X₁-X₄₀ and loop coils Y₁-Y₄₀ are connected to a selecting circuit 106 which selects any one loop coil from the loop coils X₁-X₄₀ and the loop coils Y₁-Y₄₀- Note that, although the number of the loop coils in the X-axis direction and the Y-axis direction is set to forty in the present embodiment, the number of the loop coils is not limited forty.

The selecting circuit 106 is connected to a transmission/reception switching circuit 107. A reception side terminal R of the transmission/reception switching circuit 107 is connected to an amplifier 108. The amplifier 108 is connected to a detection circuit 109, and the detection circuit 109 is connected to a sample-and-hold circuit (S/H circuit) 112 through a low-pass filter (LPF) 110. Further, the sample-and-hold circuit 112 is connected to an A/D conversion circuit (analog to digital conversion circuit) 113, and the A/D conversion circuit 113 is connected to a CPU (central processing unit) 114. Further, the CPU 114 supplies control signals respectively to the selecting circuit 106, the sample-and-hold circuit 112, the A/D conversion circuit 113 and the transmission/reception switching circuit 107.

Further, the digitizer 2 is provided with an oscillator 116 for generating an AC signal having a frequency f₀ and a current driver 117 for converting the AC signal to a current. The current driver 117 is connected to a transmission side terminal T of the transmission/reception switching circuit 107. When the CPU 114 supplies a control signal to the transmission/reception switching circuit 107 to make it switch its contact point to the transmission side, a magnetic field is generated from the loop coils X₁-X₄₀ and loop coils Y₁-Y₄₀ of the position detecting section 105.

In a state where the transmission/reception switching circuit 107 is connected to the transmission side terminal T, when the position indicator 3 approaches the position detecting section 105, the resonant circuit provided inside the position indicator 3 will resonates so as to generate an induced voltage therein. Thereafter, when the CPU 114 supplies a control signal to the transmission/reception switching circuit 107 to make it switch its contact point to the reception side terminal R, the supply of the magnetic field from the position detecting section 105 to the position indicator 3 will stop. Thus, a magnetic field will be generated from the position indicating coil provided inside the position indicator 3.

On the other hand, the magnetic field generated by the position indicating coil is detected by the loop coils X₁-X₄₀ and the loop coils Y₁-Y₄₀ of the position detecting section 105. Among the loop coils selected by the selecting circuit 106 from the loop coils X₁-X₄₀, there exists a loop coil which most strongly detects the magnetic field generated by the position indicator 3, and the position detecting section 105 detects the position of such a loop coil as an X-coordinate indicated by the position indicator 3; and among the loop coils selected by the selecting circuit 106 from the loop coils Y₁-Y₄₀, there exists a loop coil which most strongly detects the magnetic field generated by the position indicator 3, and the position detecting section 105 detects the position of such a loop coil as a Y-coordinate indicated by the position indicator 3. In such a manner, X-Y coordinates indicated by the position indicator 3 are detected by the position detecting section 105.

Note that, although the present embodiment is described using an example in which the position detecting section 105 performs coordinate detection based on an electromagnetic resonance technology, the present invention is not limited to that example. For example, the position detecting section may perform coordinate detection based on an electrostatic capacity technology, a pressure-sensitive technology, an optical detection technology or the like.

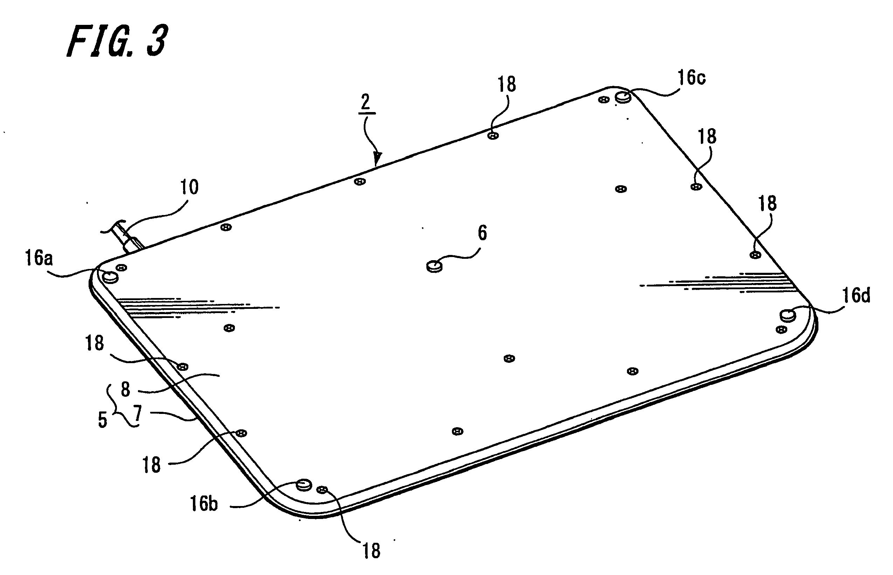

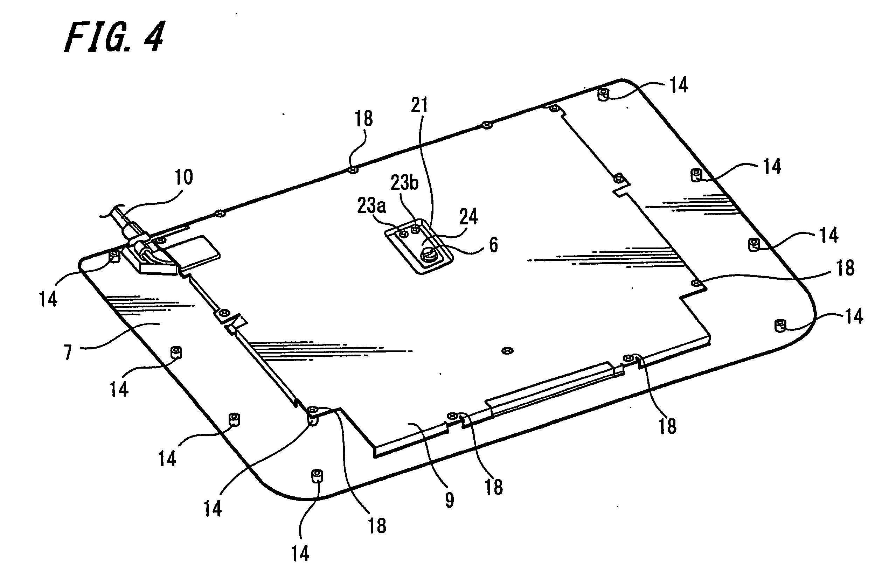

Further, as shown in Fig. 1, the upper case 7 is formed in a thin container-like shape having one opened face. The upper case 7 has a quadrangular opening 11 for exposing the input surface of the input portion 4, and two touch pad portions 12 and 13 respectively arranged on both sides of the opening 11. The input portion 4 is fitted into the opening 11. Various operation buttons for performing operations such as setting the size of a drawing area, scrolling the screen, zooming-in/out the screen and the like are arranged in the two touch pad portions 12 and 13. Further, as shown in Fig. 4, a plurality of fixing portions 14 are provided on a rear side of the upper case 7, the plurality of fixing portions 14 being provided to fix a plurality of fixing screws 18 for attaching the lower case 8 (see Figs. 3 and 5) and the frame 9 to the upper case 7.

Fig. 3 is a perspective view of the digitizer of the present embodiment when seen from the rear side of the digitizer.

The lower case 8 is formed in, for example, a thin lid-like shape. The lower case 8 is overlapped with the upper case 7 so as to close the opening of the upper case 7. Further, the lower case 8 is fixed to the upper case 7 with the fixing screws 18. Note that, in order to more firmly fix the upper case 7 to the lower case 8, the fixing between the upper case 7 and the lower case 8 is not limited to the fixing screws 18, but may be another fixing method such as, for example, an adhesive, a welding and the like. The lower case 8 is provided with, on a rear surface (i.e., a lower surface) thereof, four first projected portions 16a, 16b, 16c and 16d which come into contact with a placing surface G of a desk or the like so as to support the case 5 on the placing surface G.

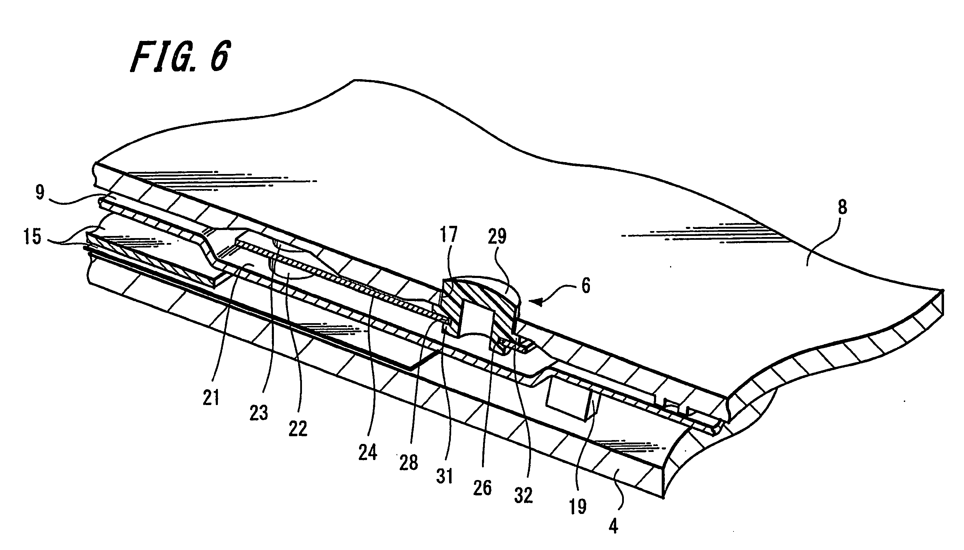

The four first projected portions 16a, 16b, 16c and 16d are substantially cylindrical members, for example, and are fixed to the four corners of the rear surface of the lower case 8 with an adhesive, for example. Note that, the method of fixing the four first projected portions 16a to 16d to the lower case 8 is not limited to the adhesive, but may include other fixing method. For example, the four first projected portions 16a to 16d may be screwed into the lower case 8 or fitted into the lower case 8. The four first projected portions 16a to 16d have substantially the same height so that one ends thereof in the axial direction are located in the same plane. Since the one ends of the four first projected portions 16a, 16b, 16c and 16d in the axial direction are located in the same plane, when being placed on the desk or the like, the digitizer 2 can be used without rattling. Further, it is preferred that a material having low friction coefficient is used as the material of the four first projected portions 16a to 16d (for example, a felt may be used as the material of the four first projected portions 16a to 16d). Further, an insertion hole 17 (see Fig. 6) for inserting the second projected portion 6 is provided substantially in the central portion of the lower case 8 (i.e., the insertion hole 17 is provided within an area surrounded by the four first projected portions 16a to 16d).

Note that, although the number of the first projected portions is four in the present embodiment, the number of the first projected portions is not limited to four. For example, in order to support the case 5 in good balance, the number of the first projected portions may be at least three, or may be five or more than five. Further, although the first projected portions are formed in a cylindrical shape in the present embodiment, the shape of the first projected portions is not limited to the cylindrical shape, but may be, for example, a polygonal prism shape, a truncated-cone shape, a truncated-pyramid shape or the like.

An engineering plastic is generally used as the material of the upper case 7 and the lower case 8, however the material of the upper case 7 and the lower case 8 may also be others such as, for example, a stainless steel.

Fig. 4 is a perspective view of the digitizer 2 of the present embodiment in a state where the lower case 8 thereof is detached. Further, Fig. 5 is a cross section cutting the digitizer 2 of the present embodiment in a longitudinal direction.

The frame 9 is a substantially flat plate-like member. The frame 9 is accommodated in the case 5 in a manner in which the frame 9 vertically partitions the space defined by the upper case 7 and the lower case 8. Further, the frame 9 covers entire rear surface of the input portion 4 via spacers 19. Further, the frame 9 is fixed to the upper case 7 with screws, for example. Further, a recessed portion 21 substantially recessed in a rectangle shape is formed in substantially the central portion of the frame 9. Note that, a steel plate made of, for example, a stainless steel is generally used as the material of the frame 9, however other material, such as a plastic plate made of an engineering plastic, may be used as the material of the frame 9.

Further, as shown in Fig. 5, a control board 15 having the CPU 114 and the like mounted thereon is arranged between the input portion 4 and the frame 9. As shown in Fig. 4, the cable 10 is connected to the control board 15. The input portion 4 transmits the input signal to the external device (not shown) through the cable 10.

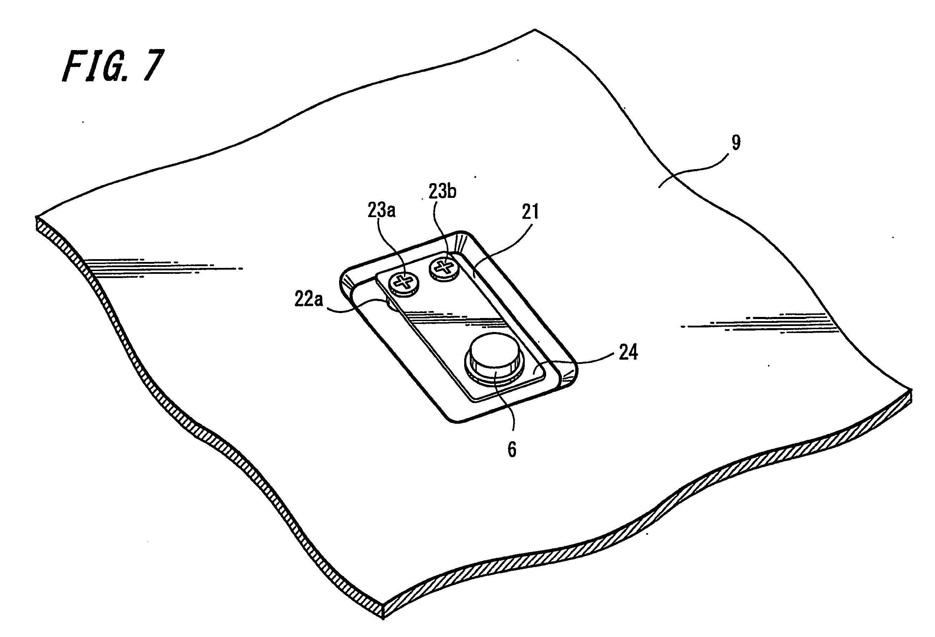

Fig. 6 is an enlarged cross section showing the second projected portion and an elastic body (a leaf spring 24) of the digitizer of the present embodiment, and Fig. 7 is an enlarged perspective view showing the second projected portion and the elastic body (the leaf spring 24) of the digitizer of the present embodiment.

In a state where the frame 9 is fixed to the upper case 7, the recessed portion 21 is recessed toward the side of the input portion 4. As shown in Fig. 7, the recessed portion 21 is provided with two fixing portions 22a and 22b, to which the leaf spring 24 is fixed by two fixing screws 23a and 23b. Since the leaf spring 24 is fixed by the two fixing screws 23a and 23b to the recessed portion 21 recessed toward the side of the upper case 7, the thickness of the case 5 can be prevented from being increased.

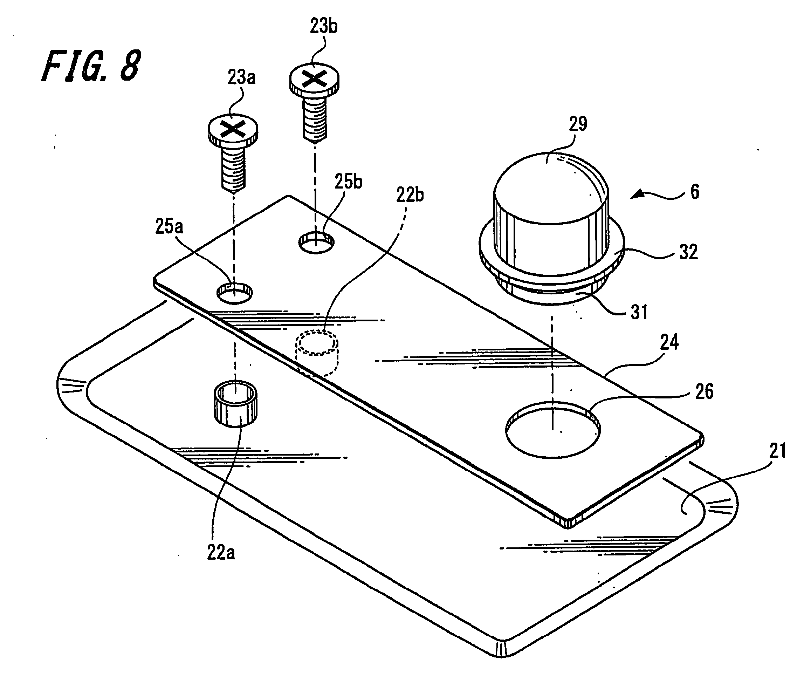

Fig. 8 is an exploded perspective showing an example of attaching the second projected portion 6 to the elastic body (the leaf spring 24).

The leaf spring 24 has two fastening holes 25a and 25b formed on one side thereof in a longitudinal direction and an engaging hole 26 formed on the other side thereof in the longitudinal direction. The two fixing screws 23a and 23b are screwed into the two fastening holes 25a and 25b to fix the leaf spring 24 to the two fixing portions 22a and 22b provided on the recessed portion 21. An engaging groove 28, which will be described later, of the second projected portion 6 is engaged with the engaging hole 26, and thereby the second projected portion 6 is attached to the leaf spring 24. Note that, although the present embodiment is described using an example in which the leaf spring is used as the elastic body, the elastic body is not limited to the leaf spring. For example, a coil spring, a rubber body or other elastic member may be used as the elastic body. Further, in the present embodiment, since the leaf spring 24 having small thickness is employed instead of employing a relatively thick elastic body such as a coil spring, it becomes possible to reduce the thickness of the case 5.

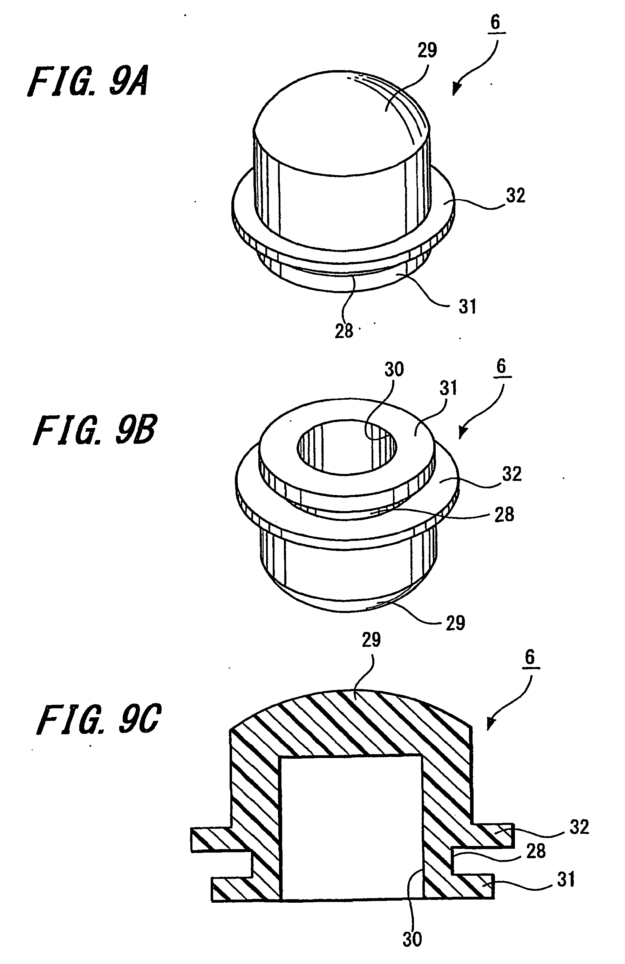

Figs. 9A to 9C show the second projected portion 6 used in the present embodiment.

The second projected portion 6 shown in Figs. 9A to 9C is a substantially cylindrical member. Further, an engaging groove 28 is formed on an outer periphery of one end portion in an axial direction of the second projected portion 6. The engaging groove 28 is a recessed portion continuously extending in a circumferential direction of the second projected portion 6. Further, a contact portion 29 in contact with the placing surface G of a desk or the like is provided on an end of the second projected portion 6 on the opposite side to the engaging groove 28. A tip end of the contact portion 29 is formed, for example, in substantially spherical shape with the central portion thereof projecting outwardly. Since the tip end of the contact portion 29 is formed in the substantially spherical shape, the contact portion 29 of the second projected portion 6 comes into point-contact with the placing surface G.

Note that, although the present embodiment is described using an example in which the contact portion 29 is formed in the spherical shape, the shape of the contact portion 29 is not limited thereto. For example, the contact portion 29 may also be formed in a circular shape, a rectangular shape, a truncated-cone shape, a truncated-pyramid shape or the like, and in such cases the contact portion 29 comes into face-contact with the placing surface G.

Further, as shown in Fig. 9C, an axial hole 30 is formed in one end in an axial direction of the second projected portion 6. The axial hole 30 has a predetermined length extending from an end face of the one end of the second projected portion 6 along the axial direction. By forming the axial hole 30 in the second projected portion 6, the rigidity of the one end in an axial direction of the second projected portion 6 is reduced, so that the second projected portion 6 becomes easy to be elastically deformed. Since the end portion on the side of the axial hole 30 of the second projected portion 6 is easy to be elastically deformed, the engaging groove 28 of the second projected portion 6 can be easily engaged to the engaging hole 26 of the leaf spring 24. Further, since the engaging groove 28 is formed in the second projected portion 6, an outer flange portion 31 and an inner flange portion 32 are consequently formed in the outer periphery of the one end in the axial direction of the second projected portion 6. The diameter of the inner flange portion 32 is larger than that of the outer flange portion 31. Note that, although the present embodiment is described using an example in which the second projected portion 6 is formed in a cylindrical shape, the second projected portion 6 may be formed in other shapes such as a polygonal prism shape.

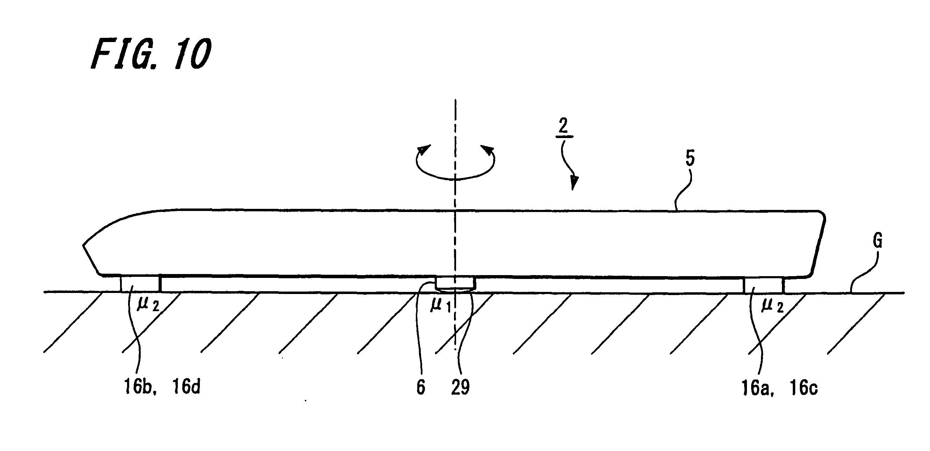

Further, as shown in Fig. 10, the friction coefficient µl of the second projected portion 6 against the placing surface G is set to be larger than the friction coefficient µ2 of the four first projected portions 16a to 16d against the placing surface G (specifically, µl > 4 x µ2). Accordingly, it is preferred that the material of the second projected portion 6 is less slippery than the material of the four first projected portions 16a to 16d. For example, a silicon rubber may be used as the material of the second projected portion 6. Incidentally, instead of using the silicon rubber as the material of the second projected portion 6, the surface of the contact portion 29 may be specially treated such as be roughened or be coated with a material having a large friction coefficient.

As shown in Fig. 1, when a force smaller the static frictional force of the second projected portion 6 but larger than that of the four first projected portions 16a to 16d is applies to the input device 1 from the side face of the case 5 by the user, the second projected portion 6 will remain unmoved while the four first projected portions 16a to 16d, which have smaller static frictional force, will slide against the placing surface G. As a result, as shown in Figs. 1 and 10, the case 5 is rotated with the second projected portion 6 as a rotation axis while the input device 1 is maintained in substantially horizontal state.

Since it is made possible to rotate the case 5 with the second projected portion 6 as a rotation axis while the input surface of the input portion 4 is maintained in substantially horizontal state, the direction of the case 5 can be easily changed into the direction in which the user feels easy to perform the handwriting input operation. Thus, since the direction of the case 5 can be changed into the direction in which the user feels easy to perform the handwriting input operation, working efficiency of the user can be improved.

Further, the second projected portion 6 is attached to the leaf spring 24 by engaging the engaging groove 28 thereof with the engaging hole 26 of the leaf spring 24. Further, as shown in Fig. 6, in a state where the lower case 8 is overlapped with the upper case 7, the contact portion 29 of the second projected portion 6 is projected to the outside of the case 5 from the insertion hole 17 of the lower case 8. At this time, the second projected portion 6 is located on the inner side of the area surrounded by the four first projected portions 16a to 16d on the rear surface of the lower case 8. Further, in order to prevent rattling when the input device 1 is placed on the placing surface G, it is preferred that the projecting length of the second projected portion 6 from the lower case 8 is substantially equal to the height in the axial direction of the four first projected portions 16a to 16d.

However, in the production process, it is difficult to assure that the four first projected portions 16a to 16d and the second projected portion 6 have the same height for all products, so that piece-to-piece variation is likely to occur. Thus, if merely attaching the second projected portion 6 to the lower case 8, it is impossible to ensure that the four first projected portions 16a to 16d and the second projected portion 6 have the same height. As a result, if the second projected portion 6 projects more than the four first projected portions 16a to 16d, rattling may occur; and if the second projected portion 6 projects less than the four first projected portions 16a to 16d, since the contact portion 29 does not contact the placing surface G, there is a concern that the second projected portion 6 may not properly function.

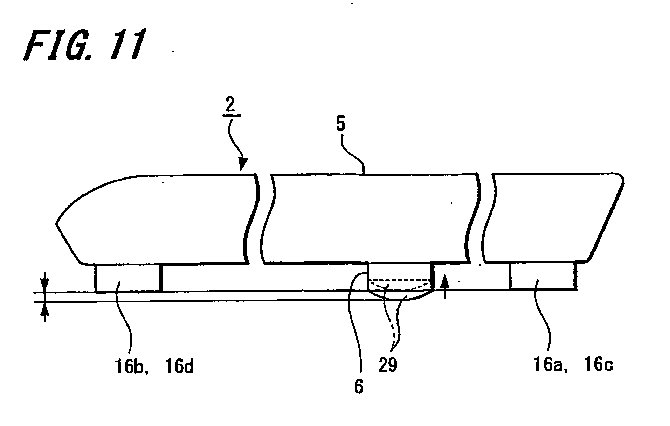

Here in the present embodiment, the second projected portion 6 is attached to the frame 9 through the leaf spring 24. With such an arrangement, as shown in Fig. 11, even if the four first projected portions 16a to 16d and the second projected portion 6 do not have the same height, the leaf spring 24 will be elastically deformed due to the gravity of the case 5 when the case 5 is placed on the placing surface G. As a result, it is possible to make the projecting length of the second projected portion 6 from the lower case 8 and the height in the axial direction of the four first projected portions 16a to 16d equal to each other. In other words, it is possible to allow the tip end of the contact portion 29 of the second projected portion 6 and the one ends of the four first projected portions 16a to 16d to be located in the same plane. Since the tip end of the contact portion 29 of the second projected portion 6 and the one ends of the four first projected portions 16a to 16d are located in the same plane, rattling of the case 5 when being placed on the placing surface G can be prevented or suppressed, and the input surface of the input portion 4 can be maintained in a substantially horizontal state.

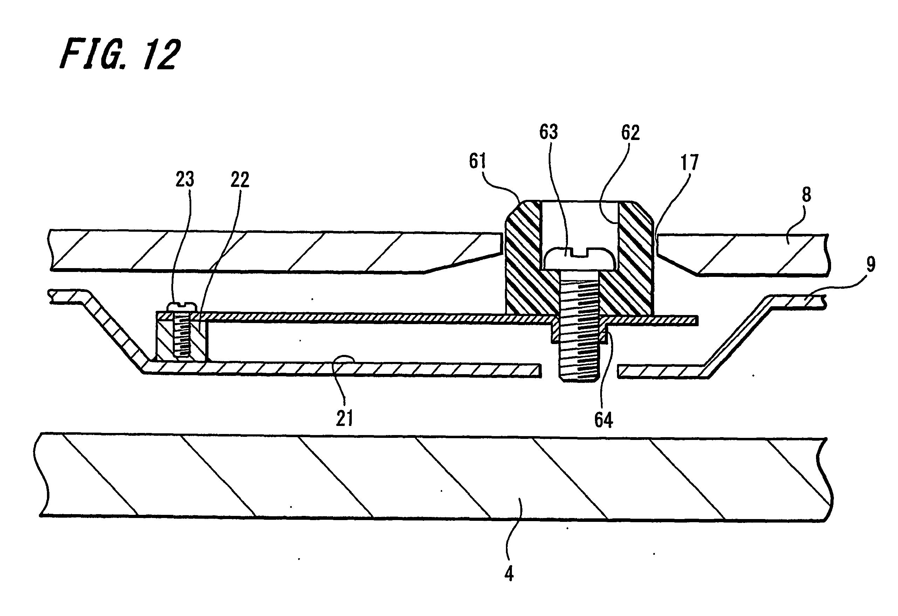

As for the fixing method for fixing the second projected portion 6, although the present embodiment is described using an example in which the engaging groove 28 of the second projected portion 6 is engaged with the engaging hole 26 of the leaf spring 24, the present invention is not limited to that example. Fig. 12 is a cross section showing another example the second projected portion of the digitizer according to the present invention. A second projected portion 61 of this example is formed in cylindrical shape. A central portion of the second projected portion 61 is formed with a fixing hole 62, into which a fixing screw 63 is screwed. Further, instead of having the engaging hole 26, the leaf spring 24 has a screw hole 64, into which the fixing screw 63 is screwed. Further, the second projected portion 61 is fixed to the leaf spring 24 with the fixing screw 63. With the second projected portion 61, the effects of the second projected portion 6 also can be achieved.

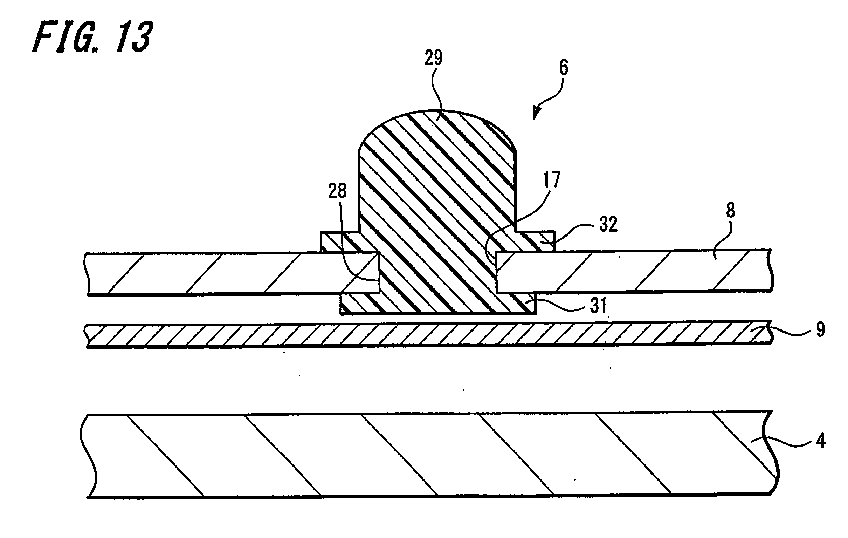

Further, although the present embodiment is described using an example in which the second projected portion 6 is attached to the frame 9 through the leaf spring 24 as an elastic body, the present invention is not limited to that example. As shown in Fig. 13, the second projected portion 6 may also be directly attached to the lower case 8 by engaging the engaging groove 28 of the second projected portion 6 with the insertion hole 17. Note that, although Fig. 13 shows an example in which the second projected portion 6 is directly attached to the lower case 8 not through an elastic body, the second projected portion 6 may also be attached to the lower case 8 through an elastic body in the same manner as is described in the present embodiment.

The digitizer 2 according to the present embodiment can be assembled by the following steps. First, the input portion 4 is fitted into the opening 11 of the upper case 7 and fixed to the opening 11 with screws or the like. Then, as shown in Fig. 4, the frame 9 is fixed to the upper case 7 with fixing screws 18 so that the frame 9 covers, via the spacers 19, the rear surface of the input portion 4 fixed to the upper case 7.

Next, as shown in Fig. 8, the leaf spring 24 is fixed to the fixing portions 22a and 22b provided on the recessed portion 21 of the frame 9 with the fixing screws 23a and 23b. Next, the second projected portion 6 is oriented so that the outer flange portion 31 side (i.e., the side opposite to the contact portion 29) thereof faces the engaging hole 26 of the leaf spring 24 fixed to the frame 9. Further, the engaging groove 28 of the second projected portion 6 is engaged to the engaging hole 26 of the leaf spring 24, and thereby the second projected portion 6 is attached to the leaf spring 24. At this time, since the axial hole 30 is formed in the second projected portion 6, the second projected portion 6 is easy to be elastically deformed, and therefore the engaging groove 28 can be easily engaged to the engaging hole 26.

Next, the second projected portion 6 fixed to the leaf spring 24 is inserted into the insertion hole 17, and the lower case 8 is overlapped with the upper case 7 so that the opening of the upper case 7 is closed. At this time, the four first projected portions 16a to 16d are previously fixed to the four corners of the rear surface of the lower case 8 with a fixing means such as an adhesive. Further, the lower case 8 is fixed to the upper case 7 with the fixing screws 18, and thereby the assembling work of the digitizer 2 is completed.

As described above, in the digitizer according to the present invention, the case is provided with the second projected portion having the friction coefficient larger than that of the first projected portions against the placing surface. Further, the second projected portion is disposed on the inner side of the area surrounded by the four first projected portions 16a to 16d. Thus, when a force smaller than the static frictional force of the second projected portion but larger than that of the first projected portions is applied to the case, the second projected portion will remain unmoved while the first projected portions, which have smaller static frictional force, will slide against the placing surface. Consequently, the case rotates with the second projected portion as a rotation axis. Thus, when drawing an illustration or the like with the pen-like input tool, if the case is oriented in a direction in which the user feels uneasy to perform the handwriting input operation, the user can easily rotate the case to a direction in which the user feels easy to perform the handwriting input operation. Thus, it is possible to provide a user-friendly digitizer capable of being rotated to a direction in which the user feels easy to perform the handwriting input operation without bothering to change his (or her) position.

Further, the second projected portion is attached to the case through the elastic body. With such an arrangement, even if the second projected portion and the first projected portions do not have the same height, the elastic body will be elastically deformed when the case is placed on the placing surface. As a result, the height of the second projected portion and the height of the first projected portions become the same. Thus, the input surface of the input portion can be maintained in horizontal state, and rattling of the case can be prevented or suppressed. Further, since the contact portion of the second projected portion in contact with the placing surface is formed in the spherical shape, the contact portion comes into point-contact with the placing surface. With such an arrangement, the case can be easily rotated.

It is to be understood that the present invention is not limited to the embodiment described above, and various modifications can be made. For example, although the aforesaid embodiment is described using an example in which the pen-like position indicator is employed as a concrete example of the input tool, a finger of the user can be used as the input tool in a case where coordinate detection of the input portion is performed based on a pressure-sensitive technology. Further, although the case and the input portion are formed in a quadrangular shape in the aforesaid embodiment, the case and the input portion may be formed in a circular shape, a triangular shape, a hexagonal shape, an octagon shape or the like.

## Claims

1. A digitizer (2) comprising:
a case (5) having an input portion (4);
at least three first projected portions (16) fixed to the case (5), the first projected portions (16) coming into contact with a placing surface (G) so as to support the case (5) on the placing surface (G);
**characterized by**
a second projected portion (6) arranged within an area defined by connecting the points at which the first projected portions (16) are fixed to the case (5), wherein the second projected portion (6) is configured in such a manner that a tip end of the second projected portion (6) and ends of the first projected portions (16) are located in the same plane when the case is placed on the placing surface, wherein a friction of the second projected portion (6) against the placing surface (G) is larger than a friction of the first projected portions (16) against the placing surface (G), so that, when a force substantially parallel to the placing surface (G) is applied to the case (5), the first projected portions (16) slide against the placing surface (G) so that the case (5) rotates with the second projected portion (6) as a rotation axis.

2. The digitizer (2) according to claim 1, wherein the case (5) includes an upper case (7) having an opening for exposing the input portion (4) and a lower case (8) for being overlapped with the upper case (7), and the second projected portion (6) is arranged in substantially the central portion of the lower case (8).

3. The digitizer (2) according to claim 1, wherein the case (5) has a substantially sheet-like frame (9) arranged therein, and the second projected portion (6) is arranged in substantially the central portion of the frame.

4. The digitizer (2) according to claim 1, wherein the second projected portion (6) is attached to the case (5) via an elastic body (24).

5. The digitizer (2) according to claim 2, wherein the second projected portion (6) is attached to the case (5) via an elastic body (24).

6. The digitizer (2) according to claim 3, wherein the second projected portion (6) is attached to the frame via an elastic body (24).

7. The digitizer (2) according to any one of claims 4 to 6, wherein the elastic body (24) is formed by a leaf spring.

8. The digitizer (2) according to claims 4 or 5, wherein the elastic body (24) is a substantially rectangular leaf spring, one end in a longitudinal direction of the leaf spring is fixed to the case (5), and the second projected portion (6) is fixed to the other end of the leaf spring.

9. The digitizer (2) according to claim 6, wherein the elastic body (24) is a substantially rectangular leaf spring, one end in a longitudinal direction of the leaf spring is fixed to the frame, and the second projected portion (6) is fixed to the other end of the leaf spring.

10. An input device (1) comprising:
a digitizer (2) according to one of the preceding claims, on which information is inputted; and
an input tool for inputting information on the digitizer (2).

## Patentansprüche

1. Digitalumsetzer (2) mit:
einem Gehäuse (5) mit einem Eingabeteil (4);
zumindest drei ersten hervorstehenden Teilen (16), die an dem Gehäuse (5) fixiert sind und in Kontakt mit einer Auflagefläche (G) sind, um das Gehäuse (5) auf der Auflagefläche (G) zu halten;
**gekennzeichnet durch**
einen zweiten hervorstehenden Teil (6), welches innerhalb eines Bereiches, der **durch** eine Verbindung von Punkten, an welchen die ersten hervorstehenden Teile (16) an dem Gehäuse (5) angeordnet sind, definiert ist, wobei das zweite hervorstehende Teil (6) ausgebildet ist, so dass eine Spitze des zweiten hervorstehenden Teiles (6) und Enden der ersten hervorstehenden Teile (16) innerhalb einer gleichen Ebene lokalisiert sind, wenn das Gehäuse auf der Auflagefläche platziert ist, wobei eine Reibung des zweiten hervorstehenden Teiles (6) in Bezug auf die Auflagefläche (G) größer ist als eine Reibung der ersten hervorstehenden Teile (16) in Bezug auf die Auflagefläche (G), so dass, wenn eine Kraft im Wesentlichen parallel zu der Auflagefläche (G) auf das Gehäuse (5) wirkt, die ersten hervorstehenden Teile (16) über die Auflagefläche (G) gleiten, so dass das Gehäuse (5) um das zweite hervorstehende Teil (6) als Rotationsachse dreht.

2. Digitalumsetzer (2) nach Anspruch 1, wobei das Gehäuse (5) ein oberes Gehäuse (7) umfasst, welches eine Öffnung zum Freilegen eines inneren Abschnittes (4) umfasst, und ein unteres Gehäuse umfasst, um mit dem oberen Gehäuse (7) zu überlappen, und wobei das zweite hervorstehende Teil (6) an einer im Wesentlichen zentralen Position des unteren Gehäuses (8) angeordnet ist.

3. Digitalumsetzer (2) nach Anspruch 1, wobei das Gehäuse (5) einen im Wesentlichen Flächenförmigen Rahmen (9) umfasst, der darin angeordnet ist, und wobei das zweite hervorstehende Teil (6) an einer im Wesentlichen zentralen Position des Rahmens angeordnet ist.

4. Digitalumsetzer (2) nach Anspruch 1, wobei das zweite hervorstehende Teil (6) mit dem Gehäuse (5) über einen elastischen Körper (24) verbunden ist.

5. Digitalumsetzer (2) nach Anspruch 2, wobei das zweite hervorstehende Teil (6) mit dem Gehäuse (5) über einen elastischen Körper (24) verbunden ist.

6. Digitalumsetzer (2) nach Anspruch 3, wobei das zweite hervorstehende Teil (6) mit dem Rahmen über einen elastischen Körper (24) verbunden ist.

7. Digitalumsetzer (2) nach einem der Ansprüche 4-6, wobei der elastische Körper (24) durch eine Blattfeder gebildet ist.

8. Digitalumsetzer (2) nach Anspruch 4 oder 5, wobei der elastische Körper (24) eine im Wesentlichen rechteckförmige Blattfeder ist, wobei ein Ende in einer longitudinalen Richtung der Blattfeder an dem Gehäuse (5) fixiert ist und das zweite hervorstehende Teil (6) an dem anderen Ende der Blattfeder fixiert ist.

9. Digitalumsetzer (2) nach Anspruch 6, wobei der elastische Körper (24) eine im Wesentlichen rechteckförmige Blattfeder ist, wobei ein Ende in einer longitudinalen Richtung der Blattfeder mit dem Rahmen fixiert ist und das zweite hervorstehende Teil (6) an dem anderen Ende der Blattfeder fixiert ist.

10. Eingabegerät (1) mit:
einem Digitalumsetzer (2) nach einem der vorhergehenden Ansprüche, auf welchen Information eingegeben wird; und
einer Eingabeeinheit zur Eingabe von Informationen auf den Digitalumsetzer (2).

## Revendications

1. Numériseur (2) comprenant :
un boîtier (5) ayant une partie d'entrée (4) ;
au moins trois premières parties en saillie (16) fixées sur le boîtier (5), les premières parties en saillie (16) venant en contact avec une surface de positionnement (G) afin de supporter le boîtier (5) sur la surface de positionnement (G) ;
**caractérisé par** :
une deuxième partie en saillie (6) agencée à l'intérieur d'une zone définie par le contact des points auxquels les premières parties en saillie (16) sont fixées sur le boîtier (5), dans lequel la deuxième partie en saillie (6) est configurée de sorte qu'une extrémité de pointe de la deuxième partie en saillie (6) et les extrémités des premières parties en saillie (16) sont positionnées dans le même plan, lorsque le boîtier est placé sur la surface de positionnement, dans lequel une friction de la deuxième partie en saillie (6) contre la surface de positionnement (G) est supérieure à une friction des premières parties en saillie (16) contre la surface de positionnement (G), de sorte que lorsqu'une force sensiblement parallèle à la surface de positionnement (G) est appliquée sur le boîtier (5), les premières parties en saillie (16) glissent contre la surface de positionnement (G) de sorte que le boîtier (5) tourne avec la deuxième partie en saillie (6) comme un axe de rotation.

2. Numériseur (2) selon la revendication 1, dans lequel le boîtier (5) comprend un boîtier supérieur (7) ayant une ouverture pour exposer la partie d'entrée (4) et un boîtier inférieur (8) destiné à être partiellement recouvert par le boîtier supérieur (7), la deuxième partie en saillie (6) est agencée dans la partie sensiblement centrale du boîtier inférieur (8).

3. Numériseur (2) selon la revendication 1, dans lequel le boîtier (5) a un châssis sensiblement en forme de feuille (9) agencé à l'intérieur de ce dernier, et la deuxième partie en saillie (6) est agencée sensiblement dans la partie centrale du châssis.

4. Numériseur (2) selon la revendication 1, dans lequel la deuxième partie en saillie (6) est fixée au boîtier (5) via un corps élastique (24).

5. Numériseur (2) selon la revendication 2, dans lequel la deuxième partie en saillie (6) est fixée au boîtier (5) via un corps élastique (24).

6. Numériseur (2) selon la revendication 3, dans lequel la deuxième partie en saillie (6) est fixée au châssis via un corps élastique (24).

7. Numériseur (2) selon l'une quelconque des revendications 4 à 6, dans lequel le corps élastique (24) est formé par un ressort à lames.

8. Numériseur (2) selon la revendication 4 ou 5, dans lequel le corps élastique (24) est un ressort à lames sensiblement rectangulaire, une extrémité dans une direction longitudinale du ressort à lames est fixée au boîtier (5), et la deuxième partie en saillie (6) est fixée à l'autre extrémité du ressort à lames.

9. Numériseur (2) selon la revendication 6, dans lequel le corps élastique (24) est un ressort à lames sensiblement rectangulaire, une extrémité dans une direction longitudinale du ressort à lames est fixée au châssis, et la deuxième partie en saillie (6) est fixée sur l'autre extrémité du ressort à lames.

10. Dispositif d'entrée (1) comprenant :
un numériseur (2) selon l'une quelconque des revendications précédentes, sur lequel l'information est entrée ; et
un outil d'entrée pour entrer l'information dans le numériseur (2).
